Europäisches Patentamt

European Patent Office

Office européen des brevets

(11) Publication number: **0 078 620**

**B1**

(12) **EUROPEAN PATENT SPECIFICATION**

(45) Date of publication of patent specification: **30.07.86**

(51) Int. Cl.⁴: **H 02 H 3/087, H 02 H 3/20**

(21) Application number: **82305487.9**

(22) Date of filing: **15.10.82**

(54) **Protective circuit for control unit power supply.**

(30) Priority: **22.10.81 JP 169017/81**

(43) Date of publication of application:
**11.05.83 Bulletin 83/19**

(45) Publication of the grant of the patent:
**30.07.86 Bulletin 86/31**

(84) Designated Contracting States:
**DE FR GB**

(56) References cited:
**US-A-3 215 896**
**US-A-3 539 865**
**US-A-3 629 622**
**US-A-3 654 518**

(73) Proprietor: **FANUC LTD**
**3580, Shibokusa Aza-Komanba Oshino-mura**
**Minamitsuru-gun Yamanashi 401-05 (JP)**

(72) Inventor: **Hattori, Masayuki**
**1271-41, Narahara-cho Hachioji-shi**
**Tokyo (JP)**
Inventor: **Inoue, Michiya**
**5-28-6, Nishihirayama Hino-shi**
**Tokyo (JP)**
Inventor: **Sakagami, Akira**
**3-27, Tamadaira Hino-shi**
**Tokyo (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

The file contains technical information
submitted after the application was filed and
not included in this specification

## Description

The present invention relates to a protective circuit, and more particularly to a protective circuit for use with a power supply system having a single power supply for applying a voltage to a control unit and a device separate from the control unit.

Numerical control systems in use today generally comprise a machine tool, a numerical control unit (hereinafter referred to as an "NC unit") for controlling the machine tool to cut or otherwise machine or perform various other operations on a workpiece, and a control board or panel on which a variety of control buttons and switches are mounted for operating the machine tool. A power supply for such a numerical control system installed in a factory is housed in a locker or compartment in the NC unit to supply a voltage to the NC unit itself and the control board or other external device such as an electric circuit on the machine tool. The power supply is connected to the external device by power supply lines to which there are also connected loads such as semiconductor devices in the NC unit. When another power supply line of AC 100 or 200 volts in the factory is accidentally brought into contact with the power supply line or lines coupled to the NC unit power supply, the high AC voltage is applied to the NC unit to thereby cause semiconductor memory or other semiconductor devices therein to malfunction or be destroyed. The NC unit is also liable to malfunction when the power supply lines for imposing a voltage to the external device are short-circuited.

Conventional power supply systems for numerical control units however have included no circuit protecting the NC unit against accidental fault contact with other higher-voltage power supply lines or short-circuiting between power supply lines.

An over-voltage protection circuit per se is known from US—A—3 539 865, which discloses a crowbar protection apparatus in which a power supply voltage is detected. Should a very large rise in the voltage occur, for example as a result of a breakdown in the power supply, the power supply voltage is short circuited through an SCR resulting in a fuse at the output of the power supply blowing, and the power supply voltage being disconnected by the fuse.

An overcurrent protection circuit per se is known from US—A—3 654 518, wherein the current from a D.C. power supply is detected. When the current rises due to short circuit or other malfunction, a sensing resistor renders a transistor in the path of the current nonconductive to break the current.

According to the present invention there is provided a power supply system for a numerical control system, comprising a power supply connected through a pair of power supply conductors to supply voltage to a numerical control unit to be protected, and an external device which is separate from the numerical control unit and which is also to receive supply voltage from said power supply through a pair of power supply lines connected to said power supply conductors, characterised in that to protect the numerical control unit against overvoltage produced upon fault contact of said power supply lines with another power supply line of a different voltage, an overvoltage protection circuit is coupled in the path between said power supply conductors and said power supply lines, said overvoltage protection circuit comprising:

an overvoltage detector circuit for detecting an overvoltage imposed between the power supply lines due to fault contact with another power supply line of a different voltage as aforesaid;

switching means energisable in response to the detection of such an overvoltage by said overvoltage detector circuit to short-circuit the power supply lines; and

a circuit breaker connected between the external device and said switching means, said circuit breaker being openable in response to energization of said switching means when said overvoltage detector circuit detects an overvoltage produced upon fault contact of the power supply lines with said another power supply line, whereby said power supply conductors can be disconnected from said another power supply line and from the external device in response to the opening of said circuit breaker thereby to protect the numerical control unit against malfunctioning or destruction which would otherwise be caused by said overvoltage, the power supply system being further characterised by a current detector circuit coupled between the overvoltage protection circuit and the power supply conductors for detecting a current flowing through one of said power supply lines a comparator for comparing the current as detected by said current detector circuit with a reference current and for producing a signal indicative of the detection of an overcurrent when the detected current is larger than said reference current; and switching means for severing the power supply conductors from said one of the power supply lines and the external device in response to said signal from said comparator, thereby to break the overcurrent and protect the numerical control unit.

The present invention provides a protective circuit for protecting semiconductor devices in an NC unit against malfunctions or destruction when power supply lines connected to an external device associated with the NC unit are accidentally brought into fault contact with a higher-voltage power supply line or are short-circuited.

The present invention provides a protective circuit capable of quickly severing an external device from a power supply therefor when power supply lines for imposing a voltage from the power supply to the external device are brought into contact with a higher-voltage power supply line.

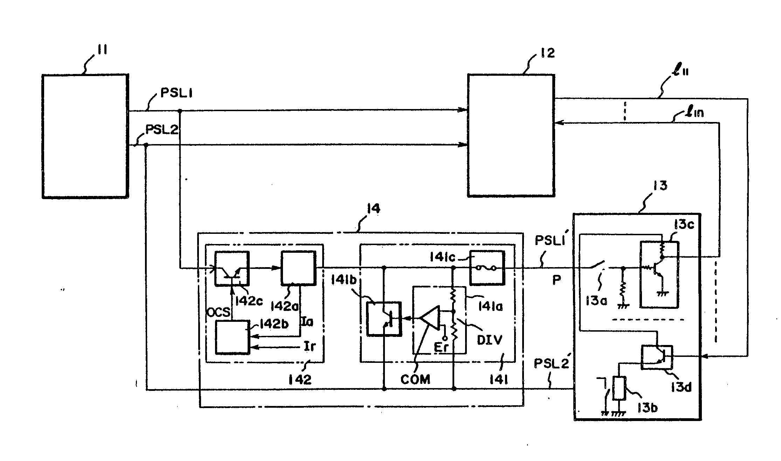

The above and other objects, features and advantages of an embodiment of the present invention will become more apparent from the following description when taken in conjunction with the accompanying drawing in which a preferred embodiment of the present invention is shown by way of illustrative example.

The sole figure is a block diagram of a protective circuit according to the present invention, as incorporated in a power supply system for a control unit and an external device separate therefrom.

The single figure shows a power supply system for a numerical control system including a power supply 11, an NC unit 12, an electric circuit 13 such as a control panel mounted on a machine tool (not shown), and a protective circuit 14 for protecting the NC unit 12 against fault contact and short-circuiting.

The power supply 11 supplies a voltage of +24 volts, for example, to the NC unit 12 over a pair of power supply lines PSL1, PSL2 and also to the electric circuit 13 through the protective circuit 14 over a pair of power supply lines PSL1′, PSL2′. The NC unit 12 and the electric circuit 13 are interconnected by a plurality of signal lines $l_{11}$ through $l_{1n}$. The electric circuit 13 has a number of circuit units composed, for example, of a switch device 13a such as a limit switch or relay contacts, a relay 13b, a driver 13c for supplying the NC unit 12 with a signal indicative of turn-on or turn-off of the switch device 13a, and a receiver 13d for actuating the relay 13b in response to a signal issued from the NC unit 12.

The protective circuit 14 is composed of a fault contact detector 141 and a short-circuit detector 142. The fault contact detector 141 comprises an overvoltage detector circuit 141a for detecting an overvoltage applied between the power supply lines PSL1′, PSL2′, a switch device 141b such as a power transistor or thyristor for short-circuiting the power supply lines PSL1′, PSL2′ in response to an overvoltage as detected by the overvoltage detector circuit 141a, and a circuit breaker 141c such as a fuse inserted in the power supply line PSL1′ between the electric circuit 13 and the switch device 141b for cutting off the power supply line PSL1′. The overvoltage detector circuit 141a includes a voltage divider DIV of series-connected resistors for dividing the voltage between the power supply lines PSL1′, PSL2′, and a comparator COM for comparing a fraction voltage at the resistor junction with a reference voltage Er. The short-circuit detector 142 has a current detector circuit 142a for detecting a current flowing through the power supply line PSL1′, a comparator 142b for comparing a current la as detected by the current detector circuit 142a with a reference current Ir and for producing as an output an overcurrent signal OCS when the current la is larger than the reference current Ir, and a control device 142c such as a transistor which can be turned off by the overcurrent signal OCS as delivered from the comparator 142b.

Operation of the power supply system of the above construction will be described.

When a higher-voltage power supply line (not shown) as of AC 100 volts is brought into fault contact with the power supply line PSL1′ at a point P, the overvoltage applied is detected by the overvoltage detector circuit 141a and the switch device 141b is turned on, whereupon the power supply lines PSL1′, PSL2′ are short-circuited. At this time, a large short-circuit current flows through the fuse 141c, which then melts away instantaneously. As a result, the power supply 11 is severed from the higher-voltage power supply line and the electric circuit 13 and hence no AC 100 volts are imposed on the NC unit 12. The semiconductor components in the NC unit 12 are therefore protected against malfunctioning or destruction.

When the power supply lines PSL1′, PSL2′ are accidentally short-circuited for some reason, a large short-circuit current la flows through the current detector circuit 142a. Since the short-circuit current la is larger than the reference current Ir, the comparator 142b produces an overcurrent signal OCS which de-energizes the transistor 142c, at which time the power supply 11 is separated from the short circuit and the electric circuit 13. As a consequence, the NC unit 12 is protected against malfunctions or destruction which would otherwise be caused by the short-circuit current la.

With the arrangement of the present embodiment therefore, the protective circuit interposed between the power supply and the external electric circuit can immediately sever the power supply from the external electric circuit when the power supply lines connected to the external electric circuit are short-circuited or brought into fault contact with a higher-voltage power supply line, thus protecting semiconductor devices in the NC unit against malfunctioning or destruction.

Although a certain preferred embodiment has been shown and described in detail, it should be understood that many changes and modifications may be made therein without departing from the scope of the appended claims.

**Claims**

1. A power supply system for a numerical control system, comprising a power supply (11) connected through a pair of power supply conductors (PSL1, PSL2) to supply voltage to a numerical control unit (12) to be protected, and an external device (13) which is separate from the numerical control unit (12) and which receives supply voltage from said power supply (11) through a pair of power supply lines (PSL1′, PSL2′) connected to said power supply conductors (PSL1, PSL2), characterised in that, to protect the numerical control unit (12) against overvoltage produced upon fault contact of said power supply lines (PSL1′, PSL2′) with another power supply line of a different voltage, an overvoltage protection circuit (141) is coupled in the path between said power supply conductors (PSL1, PSL2) and said power supply lines (PSL1', PSL2'), said overvoltage protection circuit (141) comprising:

an overvoltage detector circuit (141a) for detecting an overvoltage imposed between the power supply lines (PSL1', PSL2') due to fault contact with another power supply line of a different voltage as aforesaid;

switching means (141b) energisable in response to the detection of such an overvoltage by said overvoltage detector circuit (141a) to short-circuit the power supply lines (PSL1', PSL2'); and

a circuit breaker (141c) connected between the external device (13) and said switching means (141b), said circuit breaker (141c) being openable in response to energization of said switching means (141b) when said overvoltage detector circuit (141a) detects an overvoltage produced upon fault contact of the power supply lines (PSL1', PSL2') with said another power supply line, whereby said power supply conductors (PSL1, PSL2) can be disconnected from said another power supply line and from the external device (13) in response to the opening of said circuit breaker (141c) thereby to protect the numerical control unit (12) against malfunctioning or destruction which would otherwise be caused by said overvoltage, the power supply system being further characterised by a current detector circuit (142a) coupled between overvoltage protection circuit (141) and the power supply conductors (PSL1, PSL2) for detecting a current flowing through one of the power supply lines (PSL1', PSL2'), a comparator (142b) for comparing the current as detected by said current detector circuit (142a) with a reference current (Ir) and for producing a signal (OCS) indicative of the detection of an overcurrent when the detected current is larger than said reference current (Ir), and switching means (142c) for severing the power supply conductors (PSL1, PSL2) from said one of the power supply lines (PSL1', PSL2') and the external device (13) in response to said signal (OCS) from said comparator (142b), thereby to break the overcurrent and protect the numerical control unit (12).

2. A protective circuit according to claim 1, characterised in that said circuit breaker (141c) comprises a fuse.

**Patentansprüche**

1. Stromversorgungssystem für ein numerisches Steuersystem, das eine Stromversorgungseinrichtung (11), die über ein Paar von Stromversorgungsleitern (PLS1, PLS2) angeschlossen ist, um Spannung an eine numerische Steuereinheit (12), die zu schützen ist, anzulegen, und eine externe Einrichtung (13) enthält, die getrennt von der numerischen Steuereinheit (12) angeordnet ist und Versorgungsspannung von der Stromversorgungseinrichtung (11) über ein Paar von Stromversorgungsleitungen (PSL1', PSL2') aufnimmt, die mit den Stromversorgungsleitern (PSL1, PSL2) verbunden sind, dadurch gekennzeichnet, daß um die numerische Steuereinheit (12) gegen Überspannung zu schützen, die aufgrund einer fehlerhaften Berührung der Stromversorgungsleitungen (PSL1', PSL2') mit einer anderen Stromversorgungsleitung einer unterschiedlichen Spannung erzeugt wird, eine Überspannungsschutzschaltung (141) in den Pfad zwischen den Stromversorgungsleitern (PSL1', PSL2') und den Stromversorgungsleitungen (PSL1', PSL2') eingefügt ist, welche Überspannungsschutzschaltung (141) folgende Einrichtungen enthält:

eine Überspannungserfassungsschaltung (141a) zum Erfassen einer Überspannung, die wie zuvor erläutert zwischen den Stromversorgungsleitungen (PSL1', PSL2') aufgrund einer fehlerhaften Berührung mit einer anderen Stromversorgungsleitung einer unterschiedlichen Spannung auftritt,

ein Schaltmittel (141b), das in Reaktion auf die Erfassung einer derartigen Überspannung durch die Überspannungserfassungsschaltung (141a) betätigbar ist, um die Stromversorgungsleitungen (PSL1', PSL2') kurzzuschließen, und

einen Stromkreisunterbrecher (141c), der zwischen die externe Einrichtung (13) und das Schaltmittel (141b) geschaltet ist, welcher Stromkreisunterbrecher (141c) in Reaktion auf die Betätigung des Schaltmittels (141b) hin zu öffnen ist, wenn die Überspannungserfassungsschaltung (141a) eine Überspannung erfaßt, die aufgrund einer fehlerhaften Berührung der Stromversorgungsleitungen (PSL1', PSL2') mit der anderen Stromversorgungsleitung erzeugt wird, wodurch die Stromversorgungsleiter (PLS1, PSL2) von der anderen Stromversorgungsleitung und von der externen Einrichtung (13) in Reaktion auf das Öffnen des Stromkreisunterbrechers (141c) abgeschaltet werden können, um dadurch die numerische Steuereinheit (12) vor einer Fehlfunktion oder einer Zerstörung, die ansonsten durch die Überspannung verursacht werden könnte, zu schützen, wobei das Stromversorgungssystem desweiteren gekennzeichnet ist durch eine Stromerfassungsschaltung (142a), die zwischen die Überspannungsschutzschaltung (141) und die Stromversorgungsleiter (PSL1', PSL2') zum Erfassen eines Stroms geschaltet ist, der durch eine der Stromversorgungsleitungen (PSL1', PSL2') fließt, einen Komparator (142b) zum Vergleichen des Stroms, wie er durch die Stromerfassungsschaltung (142a) erfaßt wird, mit einem Referenzstrom (Ir) und zum Erzeugen eines Signals (OCS), das die Erfassung eines Überstroms anzeigt, wenn der erfaßte Strom größer als der Referenzstrom (Ir) ist, sowie ein Schaltmittel (142c) zum Abtrennen der Stromversorgungsleiter (PSL1, PSL2) von der einen der Stromversorgungsleitungen (PSL1', PSL2') und der externen Einrichtung (13) in Reaktion auf das Signal (OCS) aus dem Komparator (142b), um dadurch den Überstrom zu unterbrechen und die numerische Steuereinheit (12) zu schützen.

2. Schutzschaltung nach Anspruch 1, dadurch gekennzeichnet, daß der Stromkreisunterbrecher (141c) aus einer Sicherung besteht.

## Revendications

1. Bloc d'alimentation pour un système à commande numérique comprenant un bloc d'alimentation (11) connecté par l'intermédiaire d'une paire de conducteurs d'alimentation (PSL1, PSL2) pour appliquer une tension à une unité à commande numérique (12) à protéger, et un dispositif extérieur (13) qui est séparé de l'unité à commande numérique (12) et qui reçoit la tension d'alimentation dudit bloc d'alimentation (11) par l'intermédiaire d'une paire de lignes d'alimentation (PSL1', PSL2') connectées auxdits conducteurs d'alimentation (PSL1, PSL2), caractérisé en ce que, pour protéger l'unité de commande numérique (12) de la surtension produite en cas de contact accidentel desdites lignes d'alimentation (PSL1', PSL2') avec une autre ligne d'alimentation de tension différente, un circuit de protection contre les surtensions (141) est couplé sur le trajet entre lesdits conducteurs d'alimentation (PSL1, PSL2) et lesdites lignes d'alimentation (PSL1', PSL2'), ledit circuit de protection contre les surtensions (141) comprenant:

un circuit détecteur de surtension (141a) pour détecter une surtension appliquée entre les lignes d'alimentation (PSL1', PSL2') par suite d'un contact accidentel avec une autre ligne d'alimentation de tension différente comme indiqué ci-dessus;

des moyens de commutation (141b) qui peuvent être excités en réponse à la détection d'une telle surtension par ledit circuit détecteur de surtension (141a) afin de court-circuiter les lignes d'alimentation (PSL1', PSL2'); et

un coupe-circuit (141c) connecté entre le dispositif extérieur (13) et lesdits moyens de commutation (141b), ledit coupe-circuit (141c) étant capable de s'ouvrir en réponse à l'excitation desdits moyens de commutation (141b) lorsque ledit circuit détecteur de surtension (141a) détecte une surtension produite en cas de contact accidentel des lignes d'alimentation (PSL1', PSL2') avec ladite autre ligne d'alimentation, de façon que lesdits conducteurs d'alimentation (PSL1, PSL2) puissent être déconnectés de ladite autre ligne d'alimentation et du dispositif extérieur (13) en réponse à l'ouverture dudit coupe-circuit (141c) afin de protéger ainsi l'unité à commande numérique (12) contre un défaut de fonctionnement ou une destruction qui serait, sinon, provoquée par ladite surtension, le bloc d'alimentation étant encore caractérisé par un circuit détecteur de courant (142a) couplé entre le circuit de protection contre les surtensions (141) et les conducteurs d'alimentation (PSL1, PSL2) pour détecter un courant circulant dans une des lignes d'alimentation (PSL1', PSL2'), un comparateur (142b) pour comparer le courant ainsi détecté par ledit circuit détecteur de courant (142a) avec un courant de référence (Ir) et pour produire un signal (OCS) indicatif de la détection d'une surintensité de courant lorsque le courant détecté est supérieur audit courant de référence (Ir) et des moyens de commutation (142c) pour isoler les conducteurs d'alimentation (PSL1, PSL2) de l'une des lignes d'alimentation (PSL1', PSL2'), et du dispositif extérieur (13) en réponse audit signal (OCS) provenant dudit comparateur (142b), de façon à interrompre la surintensité de courant et à protéger l'unité à commande numérique (12).

2. Circuit de protection selon la revendication 1, caractérisé en ce que ledit coupe-circuit (141c) comprend un fusible.